**Europäisches Patentamt**

**European Patent Office**

**Office européen des brevets**

(19)

(11) Veröffentlichungsnummer: **0 324 907 B1**

(12) # EUROPÄISCHE PATENTSCHRIFT

(45) Veröffentlichungstag der Patentschrift:
**30.10.91 Patentblatt 91/44**

(51) Int. Cl.$^5$: **B62D 1/18**, B60R 21/00, B60K 5/12

(21) Anmeldenummer: **88117984.0**

(22) Anmeldetag: **28.10.88**

(54) Anordnung eines frontseitigen Antriebsaggregats in einem Kraftfahrzeug.

Verbunden mit 88909093.2/0388411 (europäische Anmeldenummer/Veröffentlichungsnummer) durch Entscheidung vom 17.12.90.

(30) Priorität: **19.01.88 DE 3801347**

(43) Veröffentlichungstag der Anmeldung:
**26.07.89 Patentblatt 89/30**

(45) Bekanntmachung des Hinweises auf die Patenterteilung:
**30.10.91 Patentblatt 91/44**

(84) Benannte Vertragsstaaten:
**DE ES FR GB IT SE**

(56) Entgegenhaltungen:
**WO-A-85/01709**
**DE-A- 1 455 657**
**DE-B- 1 655 597**
**DE-B- 2 506 303**
**FR-A- 2 135 395**

(73) Patentinhaber: **AUDI AG**
**Auto-Union-Strasse 1 Postfach 220**
**W-8070 Ingolstadt (DE)**

(72) Erfinder: **Der Erfinder hat auf seine Nennung verzichtet**

(74) Vertreter: **Engelhardt, Harald**
**AUDI AG Patentabteilung Postfach 220**
**W-8070 Ingolstadt (DE)**

EP 0 324 907 B1

## Beschreibung

Die Erfindung betrifft eine Anordnung eines frontseitigen Antriebsaggregats aus Motor und Getriebe in einem Kraftfahrzeug, bei welchem der Karosserieboden mit einem tunnelartigen Mittellängsträger ausgebildet ist, in welchem das dem Fahrgastraum zugewandte Ende des Antriebsaggregats hineinragt und dort das Antriebsaggregat eine Lager- und Abstützvorrichtung aufweist.

Bei einer bekannten Abstützung eines Antriebsaggregats (DE-A-2506303), das aus einer Brennkraftmaschine mit angeflanschtem Getriebe besteht, ist die Brennkraftmaschine zu beiden Seiten gelagert. Das angeflanschte Getriebe ragt in einen Mitteltunnel und ist in seinem mittleren Bereich nach unten einmal gelagert, so daß insgesamt für das Antriebsaggregat eine Dreipunktlagerung gebildet ist.

Weiter ist eine gattungsgemäße Anordnung eines frontseitigen Antriebsaggregates aus Motor und Getriebe in einem Kraftfahrzeug bekannt (FR-A-2135395), wobei der Karosserieboden mit einem tunnelartig ausgebildeten Mittellängsträger versehen ist, in welchen das dem Fahrgastraum zugewandte Ende des Antriebsaggregates mit einem Trägerrohr hineinragt und das Trägerrohr im Mittellängsträger gelagert und abgestützt ist. Eine Sicherheitseinrichtung zum Wegziehen eines Lenkrads oder Vorspannen von Sicherheitsgurten ist hier nicht vorgesehen.

Es ist zudem bekannt, bei einem Frontaufprall mit hoher Aufprallenergie das Antriebsaggregat in den tunnelartigen Mittellängsträger eindringen zu lassen und somit Aufprallenergie über Verformungen aufzunehmen. Bei einem Aufprall mit höherer Geschwindigkeit und sehr hoher Aufprallenergie kann die Energieaufnahme mit der bekannten Konstruktion nicht ausreichend sein.

Bei einem starken Frontaufprall eines Fahrzeugs ist häufig festzustellen, daß der Fahrzeuglenker trotz angelegtem Sicherheitsgurt mit dem Kopf auf das Lenkrad aufschlägt. Dies wird hervorgerufen durch die starke Vorverlagerung des Oberkörpers und des Kopfes oder zusätzlich durch den Umstand, daß beim Frontaufprall über die Lenksäule das Lenkrad in den Fahrgastraum verschoben wird. Zudem werden die Sicherheitsgurte mit üblicher Automatik erst nach einem kurzen Beschleunigungsweg in ihrem Abrollmechanismus arretiert, wodurch eine gefährliche starke Vorverlagerung des Oberkörpers sowohl beim Fahrzeuglenker als auch bei einem Beifahrer vorkommen kann. Eine wesentliche Verbesserung bei diesem Problem wird durch eine bekannte Sicherheitseinrichtung (DE-A-1655597 bzw. System "procon-ten") erreicht. Bei dieser Sicherheitsvorrichtung ist sowohl das Lenkrad als auch der Sicherheitsgurtmechanismus mit Seilen verbunden, die über eine Umlenkvorrichtung mit dem Antriebsaggregat bzw. einen "Seilfänger" am Antriebsaggregat verbunden sind.

Wenn bei einem starken Frontaufprall das Antriebsaggregat nach hinten zum Fahrgastraum verschoben wird, werden das Lenkrad aus dem möglichen Kopfaufschlagbereich in Richtung auf das Armaturenbrett weggezogen und zugleich die Sicherheitsgurte vorgespannt. Um eine zweckmäßige Anordnung für die Seilumlenkung zu erhalten, liegt der Seilfänger relativ weit zum Fahrgastraum hin am Getriebe. Bei der Vielzahl von Fahrzeugtypen mit der Möglichkeit einer Wahl unterschiedlicher Antriebsaggregate bzw. unterschiedlicher Brennkraftmaschinen- und Getriebeausführungen ist es ersichtlich, daß der Seilfänger, über den die Seile laufen oder an dem sie befestigt sind, an unterschiedlichen Stellen bei unterschiedlichen Fahrzeugausführungen zu liegen kommt. Daher sind unterschiedliche Seillängen mit dem Nachteil höherer Produktionskosten, höherer Lagerhaltungskosten, etc. für unterschiedliche Fahrzeugvarianten erforderlich.

Aufgabe der Erfindung ist es demgegenüber, eine Anordnung eines frontseitigen Antriebsaggregats so weiterzubilden, daß eine Reduzierung unterschiedlicher Seillängen möglich wird.

Gemäß Anspruch 1 wird der Seilfänger dazu auf dem Trägerrohr verschiebbar und fest arretierbar angebracht. Dadurch können für alle Fahrzeugvarianten mit unterschiedlicher Brennkraftmaschine oder unterschiedlichem Getriebe gleiche Seillängen verwendet werden. Die Einstellung zum Straffen der Seile wird durch Verschieben des Seilfängers am Trägerrohr und anschließendem Arretieren vorgenommen, wobei die Länge des Trägerrohrs als Einstellänge dient. Dies führt vorteilhaft zu einer Vereinheitlichung der Seillängen mit den bekannten Verbilligungen bei einheitlichen Teilen in der Herstellung, der Lagerhaltung, beim Kundendienst, etc.

Bei üblichen Fahrzeugkonstruktionen mit einem Antriebsaggregat aus Brennkraftmaschine und angeflanschtem Getriebe weist das Getriebe meist in Richtung auf den Fahrgastraum und das Trägerrohr ist als Verlängerung des Getriebegehäuses ausgeführt. Bei einer anderen bekannten Antriebsaggregat-Anordnung sind die Brennkraftmaschine und das Getriebe geteilt und jeweils in einem vorderen und hinteren Bereich des Fahrzeugs getrennt und über ein Zentralrohr verbunden angeordnet. Auch dieses Zentralrohr kann als erfindungsgemäßes Trägerrohr verwendet werden.

Das Trägerrohr kann im Prinzip alle möglichen Querschnitte aufweisen und auch für verschiedene Anwendungsfälle aus Vollmaterial gebildet sein. Nach Anspruch 2 wird jedoch bevorzugt ein runder oder quadratischer Querschnitt, insbesondere eines hohlen Rohres mit den Vorteilen der hohen Energieaufnahme durch sog. Faltbeulen, der preisgünstigen Herstellung und Verarbeitung und einem gewünschten niedrigen Gewicht verwendet.

Die Verbindung zwischen Antriebsaggregat bzw.

Getriebegehäuse und dem Trägerrohr muß aufgrund der Lager- und Abstützfunktion des Trägerrohrs fest sein. Nach Anspruch 3 wird daher vorgeschlagen, das Trägerrohr entweder direkt anzugießen oder am Antriebsaggregat einzustecken und/oder anzuschrauben.

Mit den Merkmalen des Anspruchs 4, daß das Trägerrohr in einem im Mittellängsträger angeordneten Momentenlager abgestützt ist, ergibt sich eine Lagerung des Antriebsaggregats mit einer gewünscht großen Basis der Lagerpunkte. Besonders günstig wird die Anordnung gemäß Anspruch 5, wenn das Trägerrohr weit hinten an seinem freien Ende in dem Momentenlager abgestützt ist. Es ergibt sich dadurch eine ruhige Lagerung des Antriebsaggregats mit kleinen Bewegungsausschlägen und damit insgesamt eine Komfortverbesserung.

Mit Anspruch 6 wird vorgeschlagen, das Trägerrohr so auszubilden, daß es sich bei einer Krafteinwirkung in seiner Längsachse gezielt verformt und faltet, wobei viel Energie aufgenommen werden kann. Im Mittellängsträger im Bereich des freien Endes des Trägerrohres ist ein Abstütz- oder Widerlager vorgesehen, das sehr fest ausgeführt ist und an dem sich das Trägerrohr mit seiner Stirnseite bei einem starken Frontaufprall mit einer Verschiebung des Antriebsaggregats abstützt. Das Trägerrohr wird dabei durch Falten verkürzt und nimmt einen bestimmten Anteil der Aufprallenergie auf. Dies führt einerseits zu einer vorteilhaften Erhöhung der Energieaufnahme insgesamt und andererseits dazu, daß vorteilhaft das Antriebsaggregat erst später in den Bereich des Fahrgastraums nach hinten geschoben wird und dort eindringt.

Anhand eines Ausführungsbeispiels wird die Erfindung mit weiteren Einzelheiten, Merkmalen und Vorteilen näher erläutert. Die einzige Fig. zeigt eine Anordnung eines frontseitigen Antriebsaggregats mit einer Verlängerung durch ein Trägerrohr, auf dem ein Seilfänger einstellbar befestigt ist und das zur Lagerung des Antriebsaggregats verwendet ist.

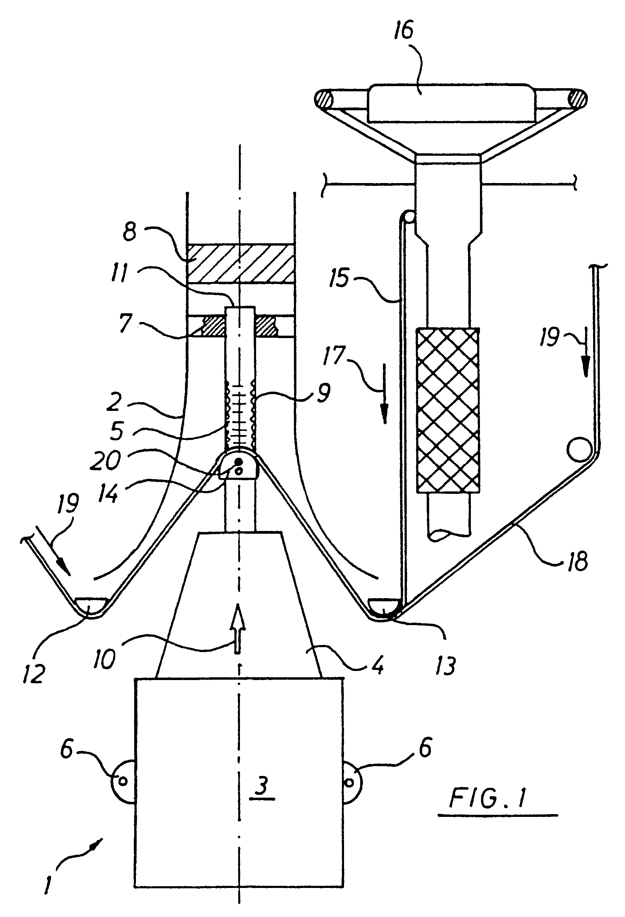

In Fig. 1 ist die Anordnung eines frontseitigen Antriebsaggregats 1 in einem Kraftfahrzeug dargestellt, bei welchem der Karosserieboden mit einem tunnelartig ausgebildeten Mittellängsträger 2 versehen ist. Das Antriebsaggregat 1 besteht aus einem Motor 3 und einem daran angeflanschten Getriebe 4. Das Getriebe 4 bzw. dessen Gehäuse ist durch ein Trägerrohr 5 in Fahrzeuglängsrichtung verlängert. Sowohl das dem Fahrgastraum zugewandte Ende des Antriebsaggregats als auch die Verlängerung durch das Trägerrohr 5 ragt in den Mittellängsträger 2 hinein.

Das Antriebsaggregat 1 aus Motor 3 und Getriebe 4 ist an der Karosserie durch zwei jeweils am Motor 3 seitlich angebrachte Motorlager 6 sowie durch ein Momentenlager 7 im Mittellängsträger 2 gelagert. In das Momentenlager 7 ragt das freie Ende des Trägerrohrs 5, das dort elastisch abgestützt wird. Die Motorlager 6 und das Momentenlager 7 enthalten für eine elastische Abstützung im wesentlichen Gummi-Metall-Elemente mit ggf. flüssigkeitsgefüllten Dämpferkammern. Die Basis für die Lagerung des Antriebsaggregats 1 ist durch den über das Trägerrohr 5 weit nach hinten in Richtung auf den Fahrgastraum versetzten dritten Lagerpunkt in gewünschter Weise groß. Dadurch kann eine akustisch günstige Lagerung des Antriebsaggregats 1 mit geringen Aggregatbewegungen und hohem Komfort durchgeführt werden.

Im Mittellängsträger 2 nach dem Momentenlager 7 ist ein Abstützlager 8 in Form einer den Mittellängsträger 2 ausfüllenden Metallplatte angeordnet. Das Trägerrohr 5 ist im Querschnitt rund oder quadratisch sowie gezielt für eine Verformung durch Falten ausgebildet, wenn eine in Achsrichtung aufgebrachte Kraft auf das Trägerrohr 5 wirkt. Die Ausbildung für eine gezielte Verformung durch Falten ist schematisch durch Einkerbungen 9 angedeutet.

Bei einem starken Frontaufprall wird das Antriebsaggregat 1 und damit das Trägerrohr 5 in Richtung auf den Fahrgastraum entsprechend dem Pfeil 10 verschoben. Dabei stützt sich die Stirnseite 11 des Trägerrohrs 5 am Abstützlager 8 ab und das Trägerrohr 5 wird unter Aufnahme von Aufprallenergie in der vorgegebenen Weise gefaltet.

An der Karosserie sind zwei Umlenkteile 12, 13 links und rechts vom Getriebe 4 fest angebracht. Ein weiteres Umlenkteil ist als Seilfänger 14 am Trägerrohr 5 befestigt. Ein Seil 15 ist am Lenkrad 16 befestigt und über das Umlenkteil 13 und dem Seilfänger 14 zum Umlenkteil 12 geführt und dort gehalten. Bei einem starken Frontaufprall, bei dem das Antriebsaggregat 1 in Richtung des Pfeiles 10 gegenüber der Karosserie verschoben wird, wird das eine Ende des Seiles 15 im Bereich des Umlenkteils 12 festgehalten, der Seilfänger 14 wird in Richtung auf den Fahrgastraum verschoben und das Umlenkteil 13 wird an der Karosserie ebenfalls festgehalten. Dadurch wird das Seil 15 am Lenkrad 16 entlang des Pfeiles 17 bewegt und somit das Lenkrad 16 aus dem Kopfaufschlagbereich eines Fahrzeuglenkers gezogen.

Ein weiteres Seil 18 ist mit (nicht dargestellten) Sicherheitsgurten verbunden. Dieses Seil 18 ist ebenfalls über die Umlenkteile 12, 13 und den Seilfänger 14 geführt (in Fig. 1 sind die Seile 17 und 18 an den Umlenkteilen 12 und 13 sowie am Seilfänger 14 in der Höhe, senkrecht zur Zeichenebene, versetzt). Wenn das Antriebsaggregat 1 bei einem starken Frontalaufprall in Richtung auf den Fahrgastraum bewegt wird, tritt eine Seilbewegung entlang der Pfeile 19 ein, wodurch über das Seil 18 die Sicherheitsgurte vorgespannt werden.

Zur Einstellung und Straffung der Seile 15 und 18 ist der Seilfänger 14 entlang dem Trägerrohr 5 verschiebbar angeordnet und beispielsweise mit Hilfe von Schrauben 20 in einer Verzahnung am Trägerrohr 5 arretierbar. Die Arretierung des Seilfängers 14 am Trägerrohr 5 kann jedoch auch auf andere bekannte Art, wie durch Verklemmen, Verkeilen, Verschweißen nach Einstellung, etc. erfolgen. Zweckmäßig liegt aber der gesamte mögliche Einstellweg in einem vorderen, dem Getriebe 4 zugewandten Bereich am Trägerrohr 5, damit in jedem Fall ein ausreichender Weg für den Seilfänger 14 zur Bewegung der Seile 17 und 18 bei einem Frontaufprall verbleibt.

Zusammenfassend wird festgestellt, daß die Verlängerung des Antriebsaggregats 1 mit dem Trägerrohr 5 die dreifache Funktion eines Einstellelements für einen Seilfänger 14, eines Lagerteils für die Lagerung des Antriebsaggregats 1 und eines energieaufnehmenden Aufprallelements aufweist.

## Patentansprüche

1. Anordnung eines frontseitigen Antriesaggregats (1) aus Motor und Getriebe in einem Kraftfahrzeug, bei welchem der Karosserieboden mit einem tunnelartig ausgebildeten Mittellängsträger (2) versehen ist, in welchen das dem Fahrgastraum zugewandte Ende des Antriebsaggregats (1) mit einem Trägerrohr (5) hineinragt und das Trägerrohr (5) im Mittellängsträger (2) gelagert und abgestützt ist, dadurch gekennzeichnet, daß ein Seilfänger (14) als Lager- und Umlenkteil für wenigstens ein Seil (15, 18) einer Sicherheitseinrichtung zum Wegziehen eines Lenkrads (16) aus dem Kopfaufschlagbereich und-/oder zum Vorspannen von Sicherheitsgurten bei einem starken Frontaufprall mit einer Verschiebung des Antriebsaggregats (1) gegenüber der Karosserie auf dem Trägerrohr (5) verschiebbar und fest arretierbar angebracht ist.

2. Anordnung nach Anspruch 1, dadurch gekennzeichnet, daß das Trägerrohr (5) im Querschnitt rund oder quadratisch ist.

3. Anordnung nach Anspruch 1 oder 2, dadurch gekennzeichnet, daß das Trägerrohr (5) am Antriebsaggregat (1) bzw. einem Gehäuse davon angegossen oder eingesteckt und/oder angeschraubt ist.

4. Anordnung nach einem der Ansprüche 1 bis 3, dadurch gekennzeichnet, daß das Trägerrohr (5) in einem im Mittellängsträger (2) angeordneten Momentenlager (7) abgestützt ist.

5. Anordnung nach Anspruch 4, dadurch gekennzeichnet, daß das Trägerrohr (5) mit seinem freien Ende in dem Momentenlager (7) abgestützt ist.

6. Anordnung nach einem der Ansprüche 1 bis 5, dadurch gekennzeichnet, daß das Trägerrohr (5) zur gezielten Verformung durch Falten ausgebildet ist, und daß im Mittellängsträger (2) im Bereich des freien Endes des Trägerrohrs (5) ein Abstützlager (8) vorgesehen ist, an dem sich das Trägerrohr (5) mit seiner Stirnseite (11) bei einem starken Frontaufprall mit einer Verschiebung des Antriebsaggregats (1) abstützt, wobei das Trägerrohr (5) durch Falten Aufprallenergie aufnimmt.

## Claims

1. An arrangement for a front-end drive unit (1) comprising the engine and transmission in a motor vehicle, for which the bottom of the vehicle body is provided with a central longitudinal beam (2) in the form of a tunnel, into which the end of the drive unit (1) facing the passenger compartment projects by means of a support tube (5), wherein the support tube (5) is located and supported in the central longitudinal beam (2), characterised in that a cable grab (14) which is movable and which can be firmly locked in place is provided as a locating and support component for at least one cable (15, 18) of a safety device for pulling a steering wheel (16) out of the region of impact with the head and/or for prestressing the seat belts on a severe frontal impact, with a displacement of the drive unit (1) in relation to the vehicle body on the support tube (5).

2. An arrangement according to Claim 1, characterised in that the support tube (5) is round or square in cross-section.

3. An arrangement according to Claims 1 or 2, characterised in that the support tube is cast in one piece with or inserted into and/or bolted to the drive unit (1) or a casing thereof.

4. An arrangement according to any one of Claims 1 to 3, characterised in that the support tube (5) is supported in a moment transmitting bearing (2) in the central longitudinal beam (2).

5. An arrangement according to Claim 4, characterised in that the support tube (5) is supported with its free end in the moment transmitting bearing (7).

6. An arrangement according to any one of Claims 1 to 5, characterised in that the support tube achieves the desired deformation by crumpling, and that a support bearing (8) is provided in the region of the free end of the support tube (5), on which bearing the support tube is supported at its rear end on a severe frontal impact comprising a displacement of the drive unit, whereupon the support tube (5) absorbs impact energy by crumpling.

## Revendications

1. Disposition d'un groupe moteur avant (1), composé d'un moteur et d'une boîte de vitesses, dans un véhicule automobile dans lequel le plancher de la carrosserie est muni d'un longeron médian (2) réalisé en forme de tunnel, dans lequel l'extrémité du groupe moteur (1) du côté du compartiment des passagers pénètre par un tube porteur (5), ce tube porteur (5) étant monté et supporté dans le longeron médian (2), caractérisée en ce qu'il est monté de façon déplaçable et blocable, sur le tube porteur (5), une grappe à câble (14) servant d'élément d'appui et de renvoi pour au moins un câble (15, 18) d'un dispositif de sécurité destiné à éloigner le volant (16) de la zone de heurt avec la tête et/ou à pré-tendre les ceintures de sécurité en cas de collision frontale violente avec déplacement du groupe moteur (1) par rapport à la carrosserie.

2. Disposition selon la revendication 1, caractérisée en ce que le tube porteur (5) est circulaire ou carré en coupe transversale.

3. Disposition selon la revendication 1 ou 2, caractérisée en ce que le tube porteur (5) est venu de fonderie avec le groupe moteur (1) ou avec un carter de celui-ci, ou il y est encastré et/ou est vissé sur lui.

4. Disposition selon l'une quelconque des revendications 1 à 3, caractérisée en ce que le tube porteur (5) est supporté dans un palier rigide aux moments, monté dans le longeron médian (2).

5. Disposition selon la revendication 4, caractérisée en ce que le tube porteur (5) est supporté par son extrémité libre dans le palier rigide aux moments (7).

6. Disposition selon l'une quelconque des revendications 1 à 5, caractérisée en ce que le tube porteur (5) est réalisé de façon à pouvoir se déformer à dessein par pliage et en ce qu'il est prévu dans le longeron médian (2), dans la région de l'extrémité libre du tube porteur (5), une butée (8) sur laquelle le tube porteur (5) s'applique par sa face d'extrémité (11) en cas de collision frontale violente avec déplacement du groupe moteur (1), le tube porteur (5) absorbant par pliage l'énergie d'impact.

*FIG.1*